(19) Europäisches Patentamt
European Patent Office
Office européen des brevets

(11) **EP 3 619 864 B1**

(12) **EUROPEAN PATENT SPECIFICATION**

(45) Date of publication and mention
of the grant of the patent:
**22.11.2023 Bulletin 2023/47**

(21) Application number: **18795224.7**

(22) Date of filing: **02.05.2018**

(51) International Patent Classification (IPC):
**H04L 1/20** *(2006.01)*  **H04L 1/24** *(2006.01)*
**H04L 25/02** *(2006.01)*  **H04L 25/40** *(2006.01)*
**H04L 25/49** *(2006.01)*

(52) Cooperative Patent Classification (CPC):
**H04B 3/46; H04B 3/52;** H04B 17/12; H04L 27/0002

(86) International application number:
**PCT/US2018/030736**

(87) International publication number:
**WO 2018/204543 (08.11.2018 Gazette 2018/45)**

(54) **SYSTEMS AND METHODS FOR IMPLEMENTING HIGH-SPEED WAVEGUIDE TRANSMISSION OVER WIRES**

SYSTEME UND VERFAHREN ZUR IMPLEMENTIERUNG EINER HOCHGESCHWINDIGKEITSWELLENLEITERÜBERTRAGUNG ÜBER DRÄHTE

SYSTÈMES ET PROCÉDÉS DE MISE EN OEUVRE DE TRANSMISSION PAR GUIDE D'ONDES À GRANDE VITESSE SUR DES FILS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.05.2017 US 201762500951 P
10.05.2017 US 201762504453 P
31.05.2017 US 201762513227 P
01.06.2017 US 201762513834 P**

(43) Date of publication of application:
**11.03.2020 Bulletin 2020/11**

(60) Divisional application:
**23204291.1**

(73) Proprietor: **ASSIA SPE, LLC
Wilmington, DE 19801 (US)**

(72) Inventors:
• **CIOFFI, John Matthew
Atherton, California 94027 (US)**
• **KERPEZ, Kenneth J.
Long Valley, New Jersey 07853 (US)**
• **HWANG, Chan-Soo
Sunnyvale, California 94087 (US)**
• **KANELLAKOPOULOS, Ioannis
Redwood City, California 94063 (US)**

(74) Representative: **Boult Wade Tennant LLP
Salisbury Square House
8 Salisbury Square
London EC4Y 8AP (GB)**

(56) References cited:
WO-A1-2017/065906    US-A- 4 847 574
US-A1- 2009 078 439    US-A1- 2012 219 085
US-A1- 2013 175 079    US-A1- 2014 266 934
US-A1- 2015 219 765    US-A1- 2016 142 094
US-A1- 2016 359 552    US-A1- 2017 018 833

**Description**

**CROSS REFERENCE TO RELATED APPLICATIONS**

This application claims the benefit and priority under 35 U.S.C. § 119(e) of Provisional Patent Application No. 62/500,951, entitled "SYSTEMS AND METHODS FOR IMPLEMENTING HIGH-SPEED DSL SYSTEMS," filed May 3, 2017 (Docket No. 107P); Provisional Patent Application No. 62/504,453, entitled "SYSTEMS AND METHODS FOR IMPLEMENTING HIGH-SPEED DSL SYSTEMS," filed May 10, 2017 (Docket No. 108P); Provisional Patent Application No. 62/513,227, entitled, "TERABIT DSLs," filed May 31, 2017 (Docket No. 109P); and Provisional Patent Application No. 62/513,834, entitled "TESTING OF WAVEGUIDE-MODE DSL CHANNELS," filed June 1, 2017 (Docket No. 110P).

**BACKGROUND**

A. Technical Field

The present disclosure relates to wired communication systems, and more particularly, to systems and methods for implementing high-speed data transmission systems using waveguide-mode transmission over wires.

B. Description of the Related Art

Digital Subscriber Line (DSL) is a communication technology that uses the copper telephone network infrastructure. A twisted pair carries electromagnetic waves using the transverse electromagnetic (TEM) mode (or, equivalently, loop-current TEM mode) where the transverse electric field is created by the electric potential difference between tip and ring wire and the transverse magnetic field is created by the conduction current between tip and ring wire. DSL speed ranges from 500 Kbps to 5 Gbps.

Even though the speed of DSL has been increasing as the technology improves, DSL speed has been historically slower than the communication techniques based on optic fiber cables (or, fiber for short) because twisted pair cannot support large bandwidth when used as a transmission line because of the large propagation losses at high frequency. Currently, most DSL systems operate in transmission-line mode at frequencies below 200 - 800 MHz; therefore, the maximum used transmission-line-mode bandwidth is less than 800MHz. A single strand of fiber has a higher capacity than a single twisted pair because typical fiber communications systems operate at about 300THz, which is about 1,000,000 times higher than the frequencies used by current DSL transmission-line modes. Additionally, fiber installation costs are often prohibitively expensive, whereas DSL systems use the existing copper twisted pair infrastructure so that cost of deployment is typically much lower. Often, the advantage of fiber's higher speed to the user's business is not sufficient to justify the higher installation fee.

WO 2017/065906 A1 discloses an antenna structure that includes a feed point that facilitates coupling to a dielectric core that supplies electromagnetic waves to a feed point, and a dielectric antenna coupled to the feed point for receiving the electromagnetic waves, the dielectric antenna including an antenna lens that operates as an aperture of the dielectric antenna, the antenna lens having a structure that adjusts a propagation of the electromagnetic waves in the dielectric antenna to reduce a cross section of far-field wireless signals generated by the dielectric antenna.

US 2017/0018833 A1 discloses a connector that includes a first port configured to receive electromagnetic waves guided by a first dielectric core of a first transmission medium.

**SUMMARY OF INVENTION**

The present invention is defined by the attached independent claims. Other preferred embodiments may be found in the dependent claims. The present application disclosesa device comprising:a transmitter (12) coupled to transmit signals to one or more signal-carrying media having waveguide properties and supporting a plurality of waveguide modes; and at least one coupler coupled between the transmitter and the signal-carrying media, the at least one coupler couples the signals to the signal-carrying media via at least one waveguide mode within the plurality of waveguide modes; and wherein the signal-carrying media comprises at least one wire, each wire comprising a conductor covered with a dielectric insulator and the first signal propagates at least partially around the at least one wire; characterized in that the transmitter has a plurality of antennas (13.1.1-13.2L.p) that shapes and concurrently transmits a first signal into the transmission media;wherein the device further comprises a calibration unit coupled within the transmitter, the calibration unit transmits a plurality of test signals onto the signal-carrying media to select a first configuration of the plurality of antennas that results in a preferred shape of the first signal; wherein, the transmitter comprises a vector precoder and one or more of the following is satisfied: a. the calibration unit adjusts settings across the vector precoder, the adjustable settings cause a shape of the plurality of test signals to change based on vector weights generated within the precoder and applied to at least one antenna within the plurality of antennas;b. the vector precoder reduces an interference caused by another transmitter or coupled from a different transmission mode which is not intended to be received by a corresponding receiver; and c. the vector precoder is a type selected from a group consisting of: linear, zero-forcing, minimum mean squared error (MMSE), non-linear, generalized decision feedback equalizer (GDFE).

**BRIEF DESCRIPTION OF THE DRAWINGS**

References will be made to embodiments of the present disclosure, examples of which may be illustrated in the accompanying figures. These figures are intended to be illustrative, not limiting. Although the present disclosure is generally described in the context of these embodiments, it should be understood that it is not intended to limit the scope of the present disclosure to these particular embodiments.

Figure 1 shows a schematic diagram of a downstream network environment according to embodiments of the present disclosure.

Figure 2 shows a schematic diagram of an upstream network environment according to embodiments of the present disclosure.

Figure 3A shows a cross sectional view of the cable in Figure 1, taken along the direction 3-3.

Figure 3B shows a partial cut away view of a cable according to embodiments of the present disclosure.

Figure 3C shows a partial cut away view of a cable according to embodiments of the present disclosure.

Figure 4 shows an enlarged view of a portion of the cable in Figure 3, illustrating waveguides in the cable.

Figure 5 shows a plurality of antennas in the transmitter according to embodiments of the present disclosure.

Figure 6A shows various types of antennas mounted on a wire according to embodiments of the present disclosure.

Figure 6B shows a cross sectional view of an antenna, taken along the direction 6B-6B according to embodiments of the present disclosure.

Figure 6C shows a cross sectional view of an antenna, taken along the direction 6C-6C according to embodiments of the present disclosure.

Figure 7A shows a structure of antennas on a wire pair, taken along the direction 7-7 in Figure 1 according to embodiments of the present disclosure.

Figure 7B shows a structure of antennas on a wire pair, taken along the direction 7-7 in Figure 1 according to embodiments of the present disclosure.

Figure 7C shows a structure of antennas on a wire pair, taken along the direction 7-7 in Figure 1 according to embodiments of the present disclosure.

Figure 8A shows a schematic diagram of sub-carrier frequencies according to embodiments of the present disclosure.

Figure 8B shows multiple precoded waveguide-mode signals that enter a cable at a sub-carrier frequency according to embodiments of the present disclosure.

Figure 9A shows a functional diagram of a downstream transmitter according to embodiments of the present disclosure.

Figure 9B shows a functional block diagram of an upstream receiver according to embodiments of the present disclosure.

Figure 10 shows a flowchart of an illustrative process for initializing a communication system according to embodiments of the present disclosure.

Figure 11 shows a flowchart of an illustrative process for transmitting data according to embodiments of the present disclosure.

Figure 12A shows a schematic diagram of a pair of wires connected to another pair of wires by a connector according to embodiments of the present disclosure.

Figure 12B shows a cross section view of the connector in Figure 12A according to embodiments of the present disclosure.

Figure 12C is an enlarged view of a splicer according to embodiments of the present disclosure.

Figure 12D shows a cross section view of a connector according to embodiments of the present disclosure.

Figure 12E is an enlarged view of a reflector according to embodiments of the present disclosure.

Figure 13 shows a plot of data rates on a single wire vs. loop length according to embodiments of the present disclosure.

Figure 14 shows a plot of data rates on two twisted pairs vs. loop length according to embodiments of the present disclosure.

Figure 15 shows a plot of data rate per receiver as a function of loop length at various frequencies according to embodiments of the present disclosure.

Figure 16 is an exemplary system according to various embodiments of the present disclosure.

Figure 17 illustrates a data rate plot per home as a function of loop length in accordance with various embodiments of the present disclosure.

## DETAILED DESCRIPTION OF THE PREFERRED EMBODIMENTS

In the following description, for purposes of explanation, specific details are set forth in order to provide an understanding of the present disclosure. It will be apparent, however, to one skilled in the art that the present disclosure can be practiced without these details. Furthermore, one skilled in the art will recognize that embodiments of the present disclosure, described below, may be implemented in a variety of ways, such as a process, an apparatus, a system, a device, or a method on a tangible computer-readable medium.

Components shown in diagrams are illustrative of exemplary embodiments of the disclosure and are meant to avoid obscuring the disclosure. It shall also be understood that throughout this discussion that components may be described as separate functional units, which may have sub-units, but those skilled in the art will recognize that various components, or portions thereof, may be divided into separate components or may be integrated together, including integrated within a single system or component. It should be noted that functions or operations discussed herein may be implemented as components. Components may be implemented in software, hardware, or a combination thereof.

Furthermore, one skilled in the art shall recognize: (1) that certain steps may optionally be performed; (2) that steps may not be limited to the specific order set forth herein; and (3) that certain steps may be performed in different orders, including being done contemporaneously.

Reference in the specification to "one embodiment," "an embodiment," or "embodiments" means that a particular feature, structure, characteristic, or function described in connection with the embodiment is included in at least one embodiment of the disclosure and may be in more than one embodiment. The appearances of the phrases "in one embodiment," "in an embodiment," or "in embodiments" in various places in the specification are not necessarily all referring to the same embodiment or embodiments.

In a conventional DSL system, the wire pairs connecting the transceivers (transmitter/receivers) on each side are acting as transmission lines; the voltage applied by each transmitter propagates through the wire pair and is read at the other end by the corresponding receiver. By contrast, various embodiments of the present invention disclose the use of the same wire pairs as "waveguides" that transmit data at much higher frequencies and at much higher speeds. The data is transmitted through wave propagation that takes various forms, such as surface waves and Total Internal Reflection (TIR) waves.

To increase communication speed, data transmission using copper wires' waveguide modes at near THz frequencies is proposed. A system that transmits data using a waveguide mode that propagates along the surface or parallel to a straight single wire may be implemented. In embodiments, a transmitter may send a surface wave to a receiver along a wire, where the wire may include a conductor core. At near THz frequencies, the wire may guide the propagation of the surface wave where axial electric field is created by the redistribution of a collection of electrons on a metal surface, called surface plasmon polaritons, and a transverse magnetic field is created by the displacement current. Unlike current DSL's transmission-line-mode methods at low frequencies, this mode at near THz frequencies has little dispersion and less path loss. The data transmission rates can be comparable to those currently used (or anticipated to be used) by fiber. The system may work reasonably well in the air, and dielectric (plastic) insulator around the wire may improve the transmission performance. However, the surface wave tends to "veer" from curved wires and the energy is lost into space, i.e., bending of the wire may cause attenuation of the received signal strength because the energy leaks. Moreover, splicing two waveguides together is difficult because it requires careful alignment of the central axes of two waveguides.

Other waveguide modes include TE1, TIR, TM2, TE2, and plasmonic TEM, along with the surface wave. These waveguide modes can be present when there is more than one metal conductor in the transmission cable. Some may veer less than the surface wave, but may have more or less attenuation. All of these together will be called "waveguide modes" and there may be significant overlap, as well as crosstalk, between the different modes. An ability to use all or some of these modes productively for each user without crosstalk and with sufficient reduction of the loss of energy caused by "veering off" would be a significant advance in the art. A waveguide mode signal is defined as a signal that propagates in accordance with any of the waveguide modes described above.

In embodiments, a transmitter (such as a DSLAM) may be remotely located from a receiver (such as a CPE). The wire between the transmitter and receiver may have numerous bending and splicing points, and the waveguide mode signal at the receiver may become too weak unless the energy loss is prevented. In embodiments, methods to transmit data in waveguide modes that may reduce the effect of the longitudinal curvatures and splicing of a single wire have been implemented.

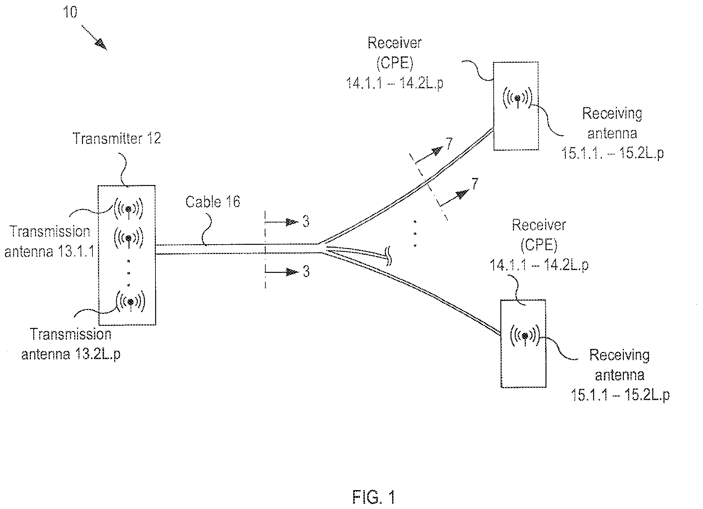

Figure 1 shows a schematic diagram of a downstream network environment **10** according to embodiments of the present disclosure. As depicted in Figure 1, a transmitter **12** may simultaneously transmit data to one or more receivers **14.1.1** - **14.2L.p** via a cable **16.** There are up to L pairs of wires and thus 2L wires with p waveguide modes of transmission per wire. It is possible that the number of waveguide modes p used at the transmitter side could be different from the number of waveguide modes used at the receive side, but usually they would be the same. The transmitter **12** may be a fiber-fed point, such as, but not limited to, digital subscriber line access multiplexer (DSLAM), optical network unit (ONU), optical line terminal (OLT), distribution point unit (DPU), distribution point, terminal, cabinet, remote terminal. The transmitter **12** may have multiple antennas **13.1.1 - 13.2L.p,** where there are up to L pairs of wires and thus 2L wires with p waveguide modes of transmission per wire. Each of the receivers **14.1.1 - 14.2L.p** may be an individual customer premises equipment (CPE), such as "gateway", or network termination, and located at the customer's location. Each of the receivers **14.1.1 - 14.2L.p** has one or more receiving antenna(s) **15.1.1 - 15.2L.p,** where there are up to L pairs of wires and thus 2L wires with p waveguide modes of transmission per wire. Each wire may support multiple simultaneous transmission waveguide modes: such as the previously mentioned TM10, TE10, plasmonic TEM, and possibly additional modes such as TM2,0 or TE20 modes. TIR mode may be supported by the entire cable, particularly when it has a metal shield. Each transmission mode may be transmitted and received by its own antennas.

As shown in Figure 1, the network environment **10** may be similar to the conventional DSL transmission system. In embodiments, the cable **16** may use the network lines to preserve the investment made in traditional telephone lines used for standard analog baseband telephone services. However, unlike the conventional DSL transmission system, the transmitter **12** and the receivers **14.1.1-14.2L.p** communicate data using waveguide-mode signals that propagate along the cable **16.**

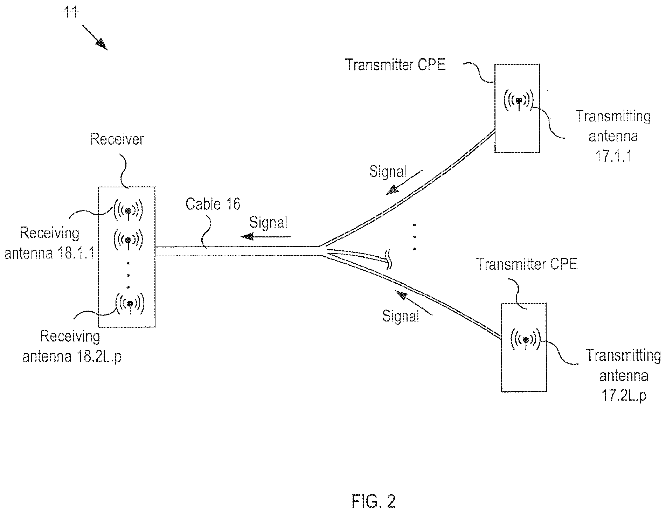

Figure 2 shows a schematic diagram of an upstream network environment **11** according to embodiments of the present invention. As depicted, the transmitter CPEs may send signals using their antennas **17.1.1 - 17.2L.p** to the receiver having antennas **18.1.1. - 18.2L.p** via the cable **16.** In embodiments, the antennas in the transmitter **12** in Figure 1 may be used as the receiving antennas in Figure 2 and the antennas in the CPEs in Figure 1 may be used as transmission antennas in Figure 2.

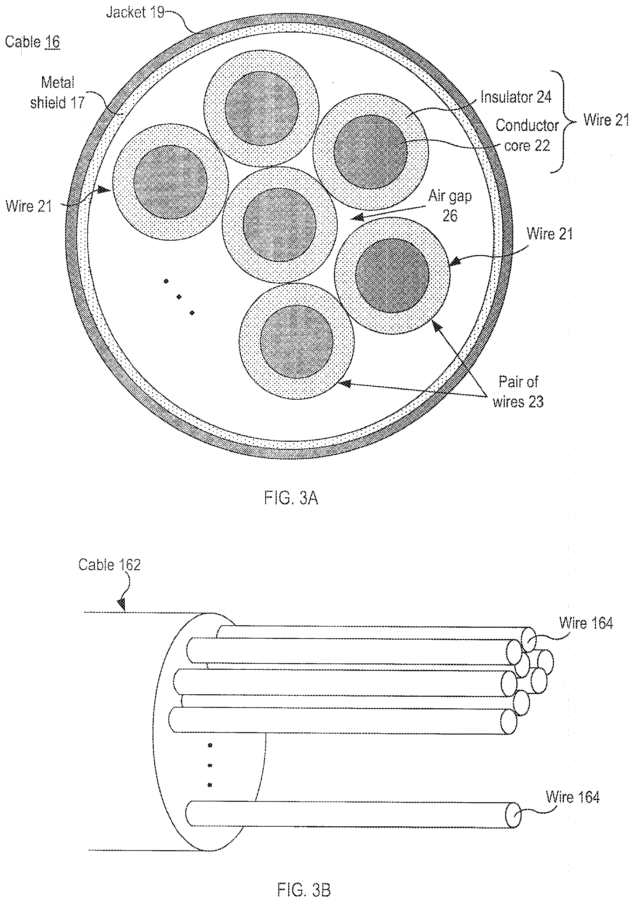

Figure 3A shows a cross sectional view of the cable **16** in Figure 1, taken along the direction **3-3.** As depicted in Figure 3A, the cable **16** may be covered with a metal shield **17** and a PVC (polyvinyl chloride) jacket **19** and include multiple wires **21,** where each pair (or quad) of wires **23** may be twisted/curved and extend from the transmitter **12** to a corresponding receiver. For the purpose of illustration, it is assumed that each receiver is using only one pair of wires. However, it should be apparent to those of ordinary skill in the art that each receiver may use more than one pair of wires, particularly in situations where there is more than one pair of drop wires to a residence (user premise).

Each wire **21** may include a conductor core **22** covered with an insulator **24,** where the insulator **24** may be formed of plastic, paper or rubber-like polymers. The air gap **26** may represent a non-conductive space between wires. It should be apparent to those of ordinary skill in the art that the cable **16** may include a suitable number of wires. In embodiments, a pair of wires (equivalently "wire pair" or "twisted pair") runs to each user premise.

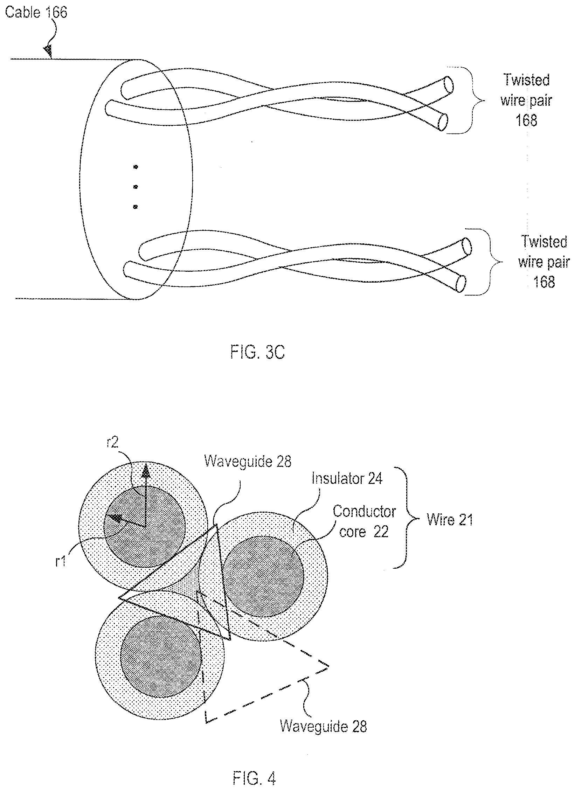

Figure 3B shows a partial cut away view of a cable **162** according to embodiments of the present disclosure. As depicted, the cable **162** may include multiple wires **164,** where the wires **164** are not twisted. Figure 3C shows a partial cut-away view of a cable **166** according to embodiments of the present disclosure. As depicted, the cable **166** may include a number of twisted pairs **168,** where each twisted pair may run to each user premise. It is possible to have groups of 4 wires (quads) twisted together and to have different twist rates on different pairs or quads.

Figure 4 shows an enlarged view of a portion of the cable in Figure 3. In embodiments, the air gap **26** and insulator **24** may form a waveguide **28** for waveguide-mode transmission waves, i.e., the conductor cores **22** may define a waveguide **28** through which the waveguide-mode signals propagate along the longitudinal direction of the cable **16.** In embodiments, the cable **16** may include a large number of waveguides **28** that are somewhat parallel but may intersect each other in many places.

In embodiments, the air gap **26** in each waveguide **28** may twist around as the waveguide modes propagate along the cable **16** and thus may not be triangularly shaped. In embodiments, a pair of wires may have different twist rates per unit length than other pairs of wires. The air gaps **26** may undergo geometric transformations as they take different shapes in each cross section of the cable, and the positions of the wires **21** may change with respect to one another. It is also noted that the wires **21** do not need to be paired and twisted as long as the wires **21** are in close proximity to each other so that the copper cores **22** can guide the waveguide modes as they propagate along the cable **16.**

In embodiments, the cable **16** may have multiple bending portions along its longitudinal direction. Some waveguide modes that travel through each waveguide **28** may "veer" from the waveguide at each twisted/bending portion. However, in embodiments, the presence of a large number of conductor cores **22** (and waveguides **28)** may allow the crosstalk (veering electromagnetic waves) to be captured and recombined. Stated differently, the cable 16 may form an equivalent of a rich-scattering cross-talking system between the different users' waveguide mode transmissions as well as between those modes for the same user. In embodiments, the metal shield **17** may facilitate the capturing and recombining of any veering waves because waves are reflected by the metal shield and returned to the other conductors as they propagate parallel to the length of the cable, instead of escaping the cable, which escape would otherwise cause a loss of energy. In embodiments, the reflected waves form a TIR mode, which is similar to the TIR modes in fiber cables. In embodiments, as depicted in Figure 4, the air gap may have an air path from any one air gap point to any other air gap point as the wires twist in pairs together, but almost randomly with respect to other pairs.

The waveguide-mode transmissions are unlike conventional DSL transmission which transmits data in the TEM mode through the pairs of wires **21** in cable **16** and requires a loop current and a termination resistance between the wires. In embodiments, data may be transmitted in the waveguide modes along the waveguides **28**. The waveguide modes propagate above a cut-off frequency, which is roughly about 100 GHz and probably below 2 THz for most cables of twisted pairs when viewed as multi-element waveguides. In embodiments, each pair has two wires, and each of those wires may support one or more waveguide modes of transmission or polarization, e.g., plasmonic TEM and TM modes. A number p of transmission modes may be used simultaneously for each of L pairs (2L wires), approximately increasing the transmission speeds by p times compared to the transmission speed using a single mode. In embodiments, TIR, TE2, and TM2 modes of transmission along the waveguides **28** may be also supported, increasing the value of p.

In embodiments, the present disclosure may include a combination of the waveguide modes for each of the curved wires and vectored signal processing to exploit various combinations of these waveguide modes, such as TM, plasmonic TEM, TIR, TM2, and so forth for each, any, and/or some/all of the users/wires. In embodiments, bandwidths that support sufficient signal strength may be found to be at frequencies in the few hundred GHz range for typical phone wires. In embodiments, the radius "r1" (shown in Figure 4) of the conductor core **22** is typically 0.2- 0.3mm. In embodiments, the radius "r2" (shown in Figure 4) of the insulator **24** is slightly larger.

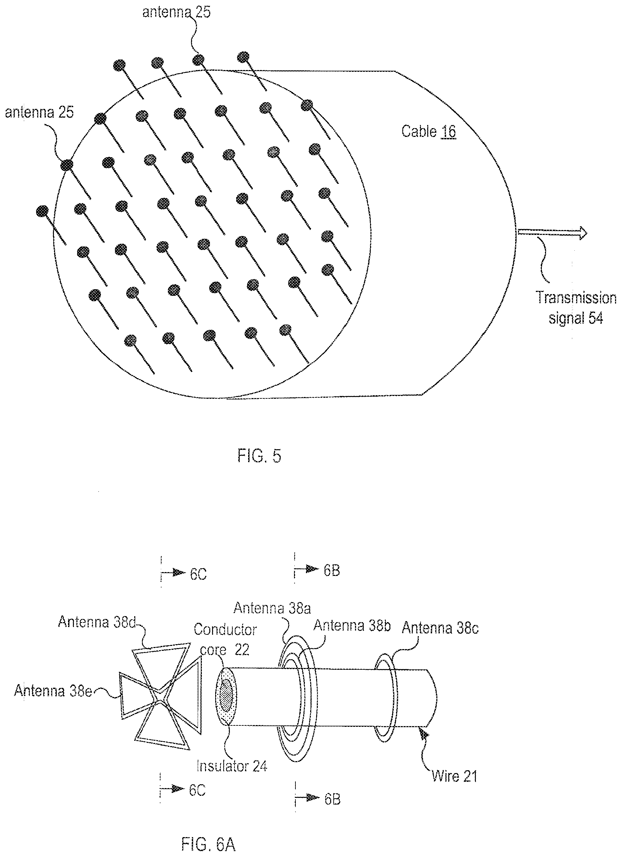

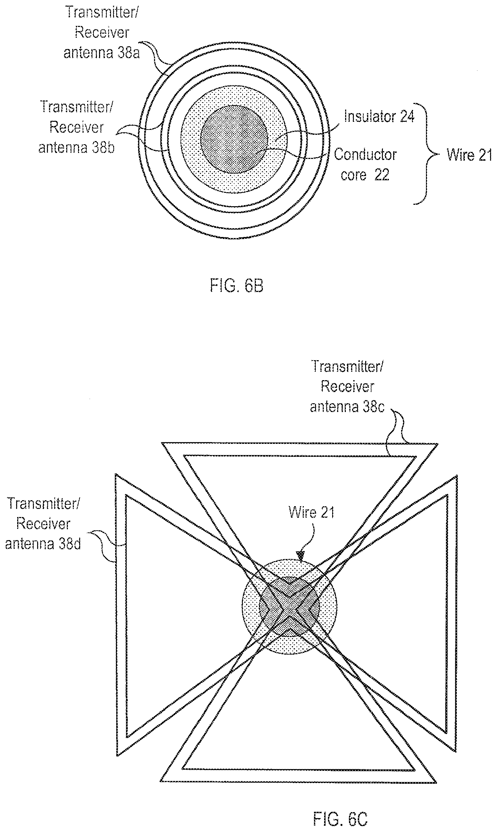

Figure 5 shows a plurality of antennas **25** in the transmitter **12** according to embodiments of the present disclosure. Figure 6A shows various types of antennas that could couple signals to a wire according to embodiments of the present disclosure. Figure 6B shows a cross sectional view of an antenna, taken along the direction 6B-6B according to embodiments of the present disclosure. Figure 6C shows a cross sectional view of an antenna, taken along the direction 6C-6C according to embodiments of the present disclosure. In embodiments, each of the antennas **38a** - **38d** may be dipoles; they may be formed of electrically conducting metal and may be used as a transmission antenna and/or receiving antenna. Often this may be made of two parallel wires across which an electromagnetic field is induced. In this two-parallel-wire embodiment, each of the antennas **38a** - **38d** may be coupled photoconductively, which associates the waveguide-mode transmissions to the conductor(s) by generating the electromagnetic waves from near-infrared laser data-modulated signals that impinge on these parallel wires. The efficiency of coupling from the signal source to the wire can be improved by aligning the polarization of the electro-magnetic wave to the waveguide mode. For example, a TM mode can be efficiently excited by radially polarized electromagnetic waves; thus, the antenna structure may include a polarizer that converts the polarization of the source electro-magnetic wave to another polarization such as radial polarization. At (near-) THz frequencies, electromagnetic waves behave like light. The efficiency of coupling from the signal source to the wire can be improved by using a lens that focuses the electromagnetic wave to a desirable location in the waveguide. For example, a TM mode can be efficiently excited by focusing the electromagnetic wave on the surface of wire.

As depicted in Figure 6A, one or more antennas **38a** - **38e,** which may correspond to antennas **25** in Figure 5, may be mounted on the wire **21,** where each of the antennas **38a** - **38e** may be used to transmit and/or receive a waveguide-mode signal. The location of antennas on the wire in Figure 6A is chosen just for illustration. The distance between antennas can be different from what is shown in Figure 6A. Usually, the antenna is placed near the end of cable. Also, depending on the type of transmission mode, the shape and dimensions of each antenna may be determined. For instance, the antennas **38a** - **38c** may have a ring shape (or a donut shape), while the outer diameter of the antennas **38a** - **38c** may vary according to the type of transmission mode. In another example, the antennas **38d** and **38e** may have a "bow tie" shape. One skilled in the art will recognize that the antenna shape may be modified in accordance with various embodiments and that those illustrated in Figure 6A are examples only. Additionally, one skilled in the art will recognize that an antenna may be located at various locations relative to a wire such as an antenna being positioned around a wire and physically contacting a dielectric, an antenna being positioned around but not physically touching a wire or dielectric, an antenna being positioned off an edge of a wire or any other location that allows a signal to be detected by the antenna itself. In certain embodiments, a dielectric may be removed from a wire to allow an antenna to be positioned to transmit or detect a signal in accordance with certain implementations described above.

Figure 6B shows three photoconductive antennas **38a** - **38c** according to embodiments of the present disclosure. As depicted, each antenna may include two concentric non-touching wires and send a waveguide-mode signal. In embodiments, the two concentric non-touching wires are approximately parallel to each other. In embodiments, more than two circular non-touching photoconductive antennas may be disposed in the concentric manner around the wire **21.**

Figures 6C shows two photoconductive antennas **38d** and **38e** according to embodiments of the present disclosure. As depicted, each of the antennas **38d** and **38e** may include two non-touching wires and the two non-touching wires may be approximately parallel to each other. In embodiments, each antenna may have a bow-tie shape and be located away from the distal end of the wire **21.**

As discussed above, in embodiments, each antenna **25** may transmit a signal in one waveguide mode, such as TE, TM, plasmonic TEM, TE2 or TM2 mode, along a corresponding waveguide **28**. As such, each wire **21** may be used to transmit a first waveguide-mode signal in TM mode on a first carrier frequency and a second waveguide-mode signal in plasmonic TEM on a second carrier frequency, where the first carrier frequency may be the same as or different from the second carrier frequency. In embodiments, the amplitude and phase of the waveguide mode signal from each antenna **25** may be controlled by a precoder of the transmitter **12,** i.e., the precoder may perform vectored signal processing to coordinate the signals that enter the waveguide(s) in different waveguide modes such that the corresponding signals that exit at each receiver are amenable for detection, for example by adjusting the signal power and/or by aligning phases of signals received from different waveguide modes, and/or by eliminating the signals that were sent using different transmission modes that are not intended to be received by the receiver. In embodiments, for instance, the precoder may control the phases and amplitudes of the waveguide-mode transmitted signals so that the waveguide modes associated with each wire or waveguide **28** experience constructive interference at a particular angle while the waveguide-mode signals experience destructive interference at other angles.

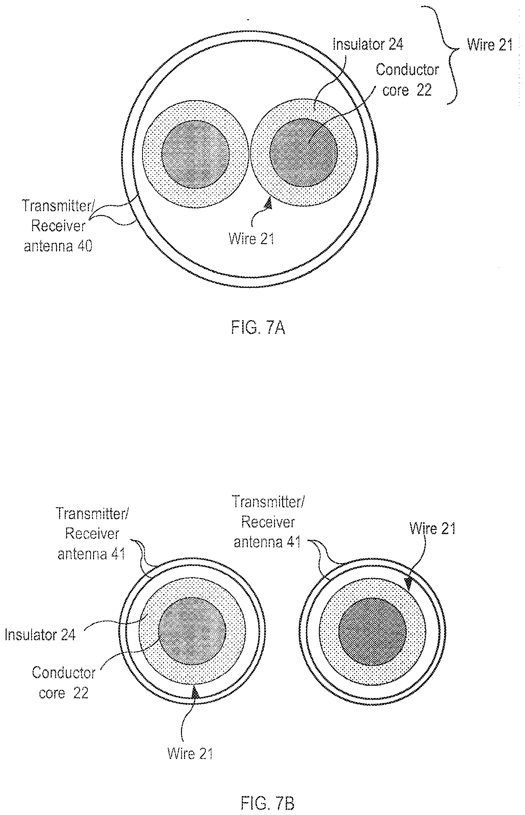

Figure 7A shows a structure of antennas, taken along the direction **7-7** in Figure 1, according to embodiments of the present disclosure. For the purpose of illustration, it is assumed that each of the receivers **14.1.1** - **14.2L.p** may use a twisted pair of wires, even though other suitable number of wire pairs may be used by each receiver. As depicted, the antenna **40** may surround a pair of wires **21** to receive the waveguide-mode signals guided by the pair of wires and include two non-touching circular wires.

In embodiments, waveguides can be formed by each wire as well as by interstices between wires. Each such waveguide may support multiple transmission modes. Transmission modes may include TM1,0 and plasmonic TEM, and also possibly additional modes such as other TM modes including TM2 modes, TIR modes, and TE modes.

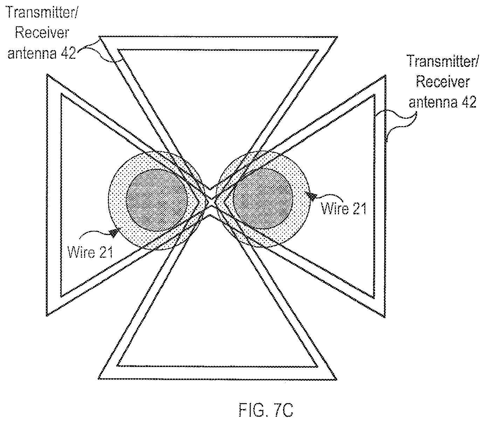

Figure 7B shows a structure of antennas on a wire pair, taken along the direction **7-7** in Figure 1 according to embodiments of the present disclosure. As depicted, two separate antennas **41** may be mounted on each wire **21.** In embodiments, each of the two antennas 41 may include two non-touching circular wires. Figure 7C shows a structure of antennas on a wire pair, taken along the direction **7-7** in Figure 1 according to embodiments of the present disclosure. As depicted, each of the antennas **42** may have a bow tie shape and include two non-touching wires that may be approximately parallel to each other. In embodiments, the antennas **42** may be disposed away from the distal end of the wires **21.**

In Figures 6A - 7C, each antenna receives waveguide-mode signals guided by one or two wires. However, it should be apparent to those of ordinary skill in the art that each antenna may surround other suitable number of wires to capture the waveguide-mode signals. Moreover, it should be apparent to those of ordinary skill in the art that each antenna needs to be connected to a load that converts electromagnetic wave to electrical signals such as voltage or current. For example, the electromagnetic wave at (near-) THz frequencies may be converted to electrical signals by exposing the electromagnetic waves to a photodetector.

In embodiments, the downstream transmission, which refers to information that flows from the transmitter **12** to the receivers **14.1.1** - **14.2L.p,** may use a vector broadcast channel, while the upstream transmission, which refers to information that flows from the transmitters that are collocated with the receivers **14.1.1** - **14.2L.p** to the receiver that is collocated with the transmitter **12,** may use a vector multiple-access channel. In embodiments, a specific transmission processing method, known as "Generalized Decision Feedback Equalizer (GDFE)" may be implemented on each tone or subcarrier of a discrete multitone (DMT) transmission system independently if all transmission systems in the cable **16** use a common symbol-rate clock with appropriate cyclic extensions or the equivalent as is well known in the art. The GDFE can greatly reduce complexity compared to simply transmitting across a wideband channel. In embodiments, the downstream system may use a nonlinear (or dirty paper) precoder along with a linear pre-processing matrix, while the upstream systems may use a generalized decision feedback (successive decoding) approach independently on each tone, with overall bit assignments for each user and each tone determined by well-known methods.

In embodiments, the system **10** of Figure 1 may estimate the overall channel response for each combination of transmitter and receiver, instead of the individual interference response at each segment that causes interference, such as splice, bending, proximity of two conductors, and so forth. It may be quite difficult to estimate the individual interference response because there are so many segments that cause interference along the cable **16.** In embodiments, the path of energy flow from the transmitter to receiver may resemble a swiss cheese with many randomly located holes inside. As it may be impractical to estimate the location of the holes in the Swiss cheese, it is impractical to estimate the interference coupling at each coupling points. In embodiments, based on the estimated channel, the GDFE can find the best transmission configuration that passes energy most efficiently. Since the channel response can be different for different cables or for different uses, in embodiments, adaptive learning may be used to estimate the channel.

In embodiments, other transmission processing methods may be employed for the transmission system **10,** including linear precoding and Multi-input-multi-output (MIMO) processing. In embodiments, alternatives to DMT that also divide up a single wideband channel into multiple parallel sub-carriers may also be used, where the alternatives may include orthogonal frequency division multiplexing (OFDM), filter banks, code division multiple access (CDMA), separate analog channels, and wavelets. In embodiments, all transmitter and receiver processing described here may be performed separately on each sub-carrier. In embodiments, alternatives to DMT include an ultra-wideband (UWB) scheme that uses pulses containing a signal with broad frequency spectrum.

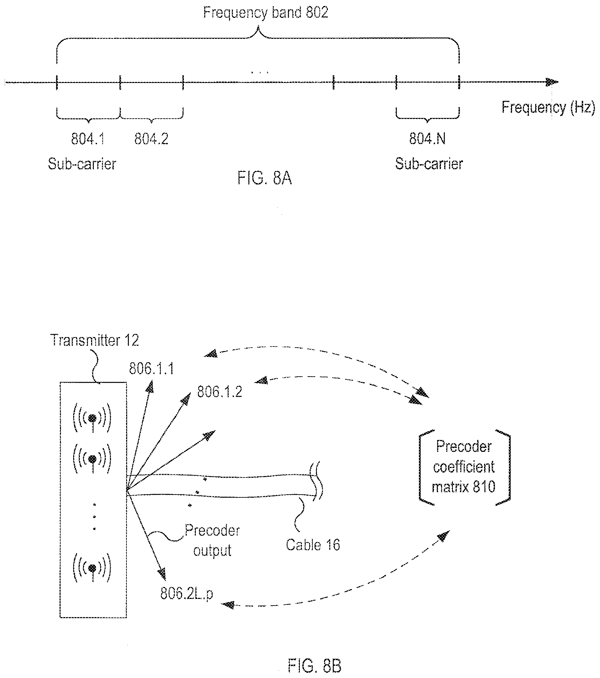

In embodiments, the performance of the system **10** may be a function of carrier frequency. To determine a preferred carrier frequency for each data mode, the frequency band may be divided into multiple sub-carrier frequencies and the transmission rate of each mode may be measured at each sub-carrier frequency. Figure 8A shows a schematic diagram of sub-carrier frequencies **804.1** - **804.N** (or, sub-carriers for short) according to embodiments of the present disclosure. As depicted, the frequency band **802** may be divided into multiple sub-carrier frequencies.

Figure 8B shows the "beam patterns" of precoded waveguide-mode signals that enter the cable **16** at one of the sub-carrier frequencies **804.1** - **804.N** according to embodiments of the present disclosure. As depicted, the prefilter of the transmitter **12** may control the amplitudes and phases of the transmitted waveguide modes before they pass through the modulators and to the antennas **25,** where each of the arrows **806.1.1** - **806.2L.p** represents a waveguide-mode resultant spatial path for data transmission corresponding to one of the users 14. There may optionally be a (nonlinear) precoder prior to the prefilter that helps pre-subtract interference that would have been present in the spatial path from any other user's data that is not intended for the particular customer's premise. In embodiments, each of the receivers **14.1.1** - **14.2L.p** may use one pair of wires for communication with the transmitter **12,** with up to 2p waveguide-transmission modes per each of the L pairs, thereby using p data modes, i.e., a total of 2Lp modes may be used to transmit data to the receivers **14.1.1** - **14.2L.p.** The precoder of the transmitter **12** may multiply the input data vector by a *2Lp x 2Lp* matrix on each tone. This matrix is called the precoder coefficient matrix (or, coefficient matrix for short) **810,** where each element of the coefficient matrix **810** is a complex gain of amplitude and phase for a waveguide-mode signal on the corresponding sub-carrier.

In embodiments, the signals may be transmitted or received using twisted pairs that are not connected to any receivers, in particular when the interference between the unused twisted pair and active twisted pairs is strong. Using the unused lines, the dimension of the precoder matrix is increased to facilitate the design of an optimal precoder matrix.

In embodiments, to identify the preferred sub-carrier frequency for each mode, the transmitter **12** may perform an initialization process. During the initialization process, the transmitter **12** may apply the coefficient matrix **810** to the antennas **25** to send probing sequences (or, defined bit sequence), covering all candidate sub-carrier frequencies **804.1** - **804.N** on each mode. Then, the transmitter **12** may receive the mode's channel-response feedback from the receivers **14.1.1** - **14.2L.p.** Based on the received channel-response feedback, the channel response of all channels and the crosstalk response between all modes for all users may be estimated. Then, based on the estimated channel and crosstalk responses, the preferred sub-carrier frequency and, possibly, a transmit power-spectral-density (PSD) may be identified. Upon completing the initialization process, the transmitter **12** may begin communicating data with the receivers **14.1.1** - **14.2L.p** (and vice versa).

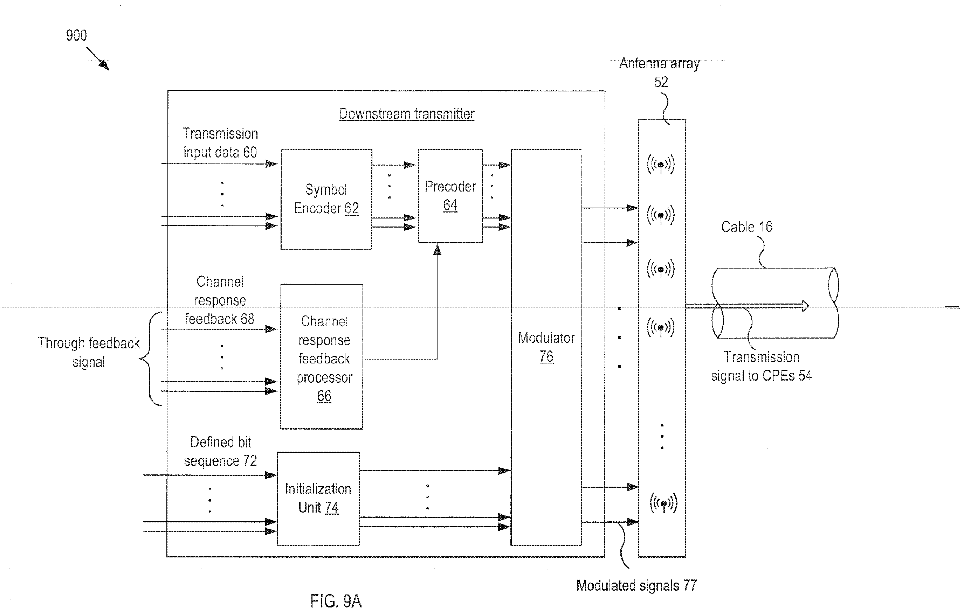

Figure 9A shows a functional block diagram **900** of the downstream transmitter **12** according to embodiments of the present disclosure. In embodiments, the receivers **14.1.1** - **14.2L.p** may be configured to process data in different transmission modes. In embodiments, the channel-response transmission matrix may have the main channel responses on its diagonal elements, with crosstalk channel responses on the off-diagonal elements. In embodiments, the channel response transmission matrix (or, transmission matrix for short) for the set of all transmission modes used by the receivers **14.1.1 -14.2L.p** may be learned adaptively by a suitable training/initialization method that employs the defined modulated bit sequence (probing sequence) **72.** In embodiments, the transmission matrix may be determined based on the estimated channel response of all channels and the crosstalk responses between all pairs of channels during the initialization process. In embodiments, the transmission matrix may also be calculated using data-directed feedback, and may account for noise statistics. The defined bit sequence **72** may include reference data having a sequence known to both the transmitter **12** and receivers **14.1.1** - **14.2L.p.**

In conventional DSL systems, the wire pair connecting the two transceivers on either side of the system is guaranteed to be the main communication channel between these two transceivers. The crosstalk channels induced by other wires surrounding the main wire pair will always be significantly weaker than the main channel. This allows conventional DSL systems to use training/initialization processes that utilize the main channel to efficiently learn the characteristics of the main channel and of the crosstalk channels.

In the waveguide-based approach to wireline communications disclosed here, there are no guarantees that the waveguides adjacent to the main wire pair will correspond to the main channel between the two transceivers. The "Swiss cheese" waveguide described here will typically result in a very complex pattern of guided and reflected waves that may result in a very different transmission channel matrix that is not diagonally dominant. Therefore, conventional initialization processes may not be effective in this approach.

One embodiment of the invention disclosed herein uses an additional phase in the initialization process that utilizes the reciprocity of the linear transmission medium to generate a first approximation of the channel matrix. In this additional initialization phase, the transceiver equipment located at the customer premises transmits known symbol sequences at different frequencies. The signals received at the other end provide a good first estimate of the main channel that corresponds to that particular customer location. By sweeping both the upstream and downstream frequencies, this process may generate a good first estimate of the corresponding channel matrix entries for both the upstream and downstream channels, namely of the corresponding column of the upstream channel and the corresponding row of the downstream channel matrix. Repeating this process for each of the customer premises will yield a good first estimate of the entire upstream and downstream channel matrices. This estimate may then be used in more traditional initialization methods to more efficiently generate accurate estimates of the upstream and downstream channel matrices.

In embodiments, the initialization unit **74** may perform the initialization process using the defined bit sequence **72** to determine the transmission matrix, where each element of the transmission matrix represents the status of a mode's channel between a transmission antenna **13** and one of the receiver antennas **15.1.1** - **15.2L.p,** i.e., each element of the transmission matrix acts as some factors distorting/deteriorating the signal transmitted through a corresponding channel. In embodiments, during training/initialization or using channel-estimation symbols, the receivers **14.1.1** - **14.2L.p** may receive the defined bit sequence **72** from each transmission antenna via the cable **16** at each sub-carrier frequency, determine the channel response feedback **68** between the receiver and transmission antenna, and send the determined channel response feedback **68** to the channel response feedback processor **66.**

In embodiments, the channel response feedback processor **66** may process the received channel response feedback **68** through a feedback signal to estimate the channel response of all channels and the crosstalk response between all pairs of channels. Then, based on the estimated channel and crosstalk responses, the channel response feedback processor **66** may determine the transmission matrix. In embodiments, the precoder **64** may determine the precoder coefficient matrix **810** that controls the amplitudes and phases of waveguide-mode signals to be transmitted on the channels for all active sub-carrier frequencies. The channel response feedback processor **66** may also be involved with determining precoder coefficients. In embodiments, the channel response feedback processor **66** and the precoder **64** may identify the preferred sub-carrier frequency for each channel and, possibly, a transmit power-spectral-density (PSD) for each channel. The precoder **64** may be structured as a linear precoder, zero-forcing precoder, minimum mean squared error (MMSE) precoder, non-linear precoder, GDFE or other structure used to decrease crosstalk at receivers from a multi-output transmitter. In embodiments, the precoder **64** may include a non-linear processor and a linear processor. In embodiments, all of the output signals from the precoder 64 may be synchronized in time.

In embodiments, to transmit the transmission input data **60** to the receivers **14.1.1** - **14.2L.p,** the input data may be encoded by the symbol encoder **62**. In embodiments, the symbol encoder **62** may use various types of modulation technique, such as Quadrature Amplitude and phase modulation (QAM) and Quadrature phaseshift keying (QPSK), to modulate the transmission input data **60**. Also, in embodiments, the symbol encoder **62** may perform pre-compensation on the transmission data **60** so that the distortion and attenuation of the transmission signal **54** during its travel along the cable **16** may be compensated. Then, for each channel, the precoder **64** may select a preferred sub-carrier frequency and the coefficient matrix **810** and process the encoded input data according to the coefficient matrix. The antenna array **52**, which may correspond to the antennas **25**, may transmit the processed data to the receivers **14.1.1** - **14.2L.p** through the cable **16**.

In embodiments, the transmitter **12** may include other components, such as digital-to-analog converter to convert the digital data into analog signals, and transmit filtering. Also, the precoder **64** may perform other functions, such as precoder ordering.

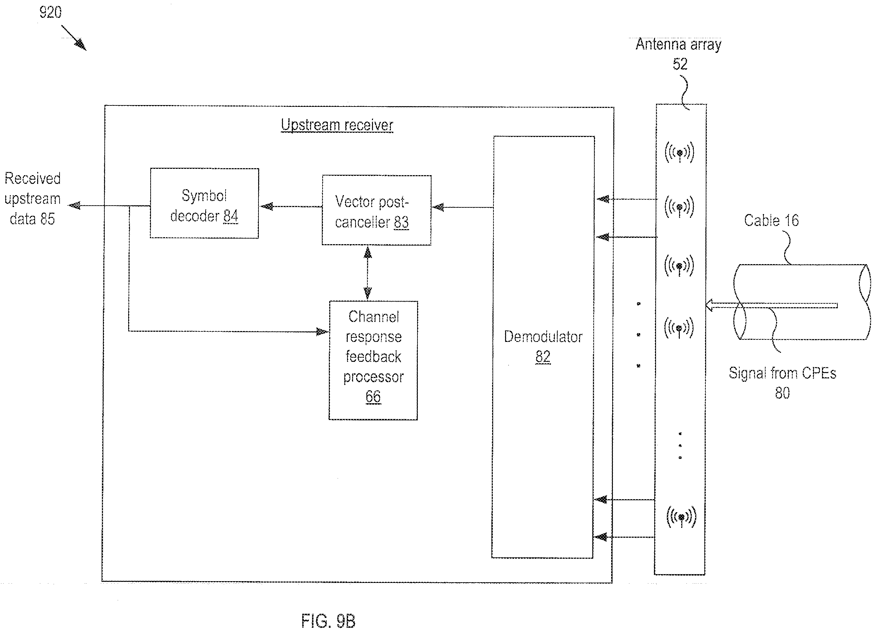

Figure 9B shows a functional block diagram **920** of an upstream receiver according to embodiments of the present disclosure. In embodiments, the upstream receiver **920** may be included adjacent to the transmitter **12**. As depicted, the signal from CPEs (receivers) **14.1.1** - **14.2L.p** may be transmitted via the cable **16** and received by the antenna array **52**. In embodiments, one or more demodulators **82** may decode the received upstream DMT symbols. The vector post-canceller **83** may remove crosstalk between channels.

In embodiments, the symbol decoder **84** may accept the output signal from the vector post-canceller **83** and estimate the received symbols, which are then output as received upstream data **85.** During training phases or during reception of training symbols, the output **85** of the symbol decoder **84** may be fed-back to the channel response feedback processor **66** that estimates the channel and crosstalk responses. Some of the received upstream data **85** may carry estimates of the downstream channel and crosstalk responses, or downstream received error signals, which correspond to channel response feedback and are input to the downstream channel response feedback processor **66.** Both downstream and upstream directions may also carry in overhead signals the numbers of bits and gains that are transmitted for each mode/user on each sub-carrier as is typically done in DMT/multicarrier transmission systems (often called "bit swapping").

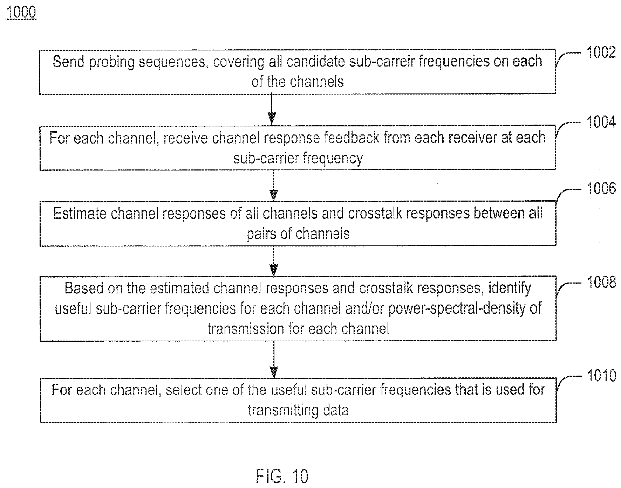

Figure 10 shows a flow chart **1000** of an illustrative process for initializing a communication system according to embodiments of the present disclosure. In embodiments, the initialization process may be performed on a regular basis or each time when there is a change to the system **10.** The process **1000** starts at step **1002.** At **1002,** the transmitter **12** may send a probing sequence (or, define bit sequence) **72** to the receivers **14.1.1** - **14.2L.p,** covering all candidate sub-carrier frequencies **804.1** - **804.N** on each of the channels. In embodiments, each wire in the cable **16** may provide two or more modes for transmitting waveguide-mode signals.

At **1004,** for each channel, the transmitter **12** may receive channel response feedback from each receiver at each sub-carrier frequency. At step **1006,** based on the received channel response feedback, channel responses of all channels and crosstalk responses between all pairs of channels may be estimated. Then, at step **1008,** based on the estimated channel responses and crosstalk responses, useful sub-carrier frequencies for each channel may be identified.

Also, preferred sub-carrier frequencies and a preferred power-spectral-density (PSD) may be determined for each channel **(1008).** At step **1010,** for each channel, one of the useful sub-carrier frequencies that is to be used for transmitting data may be selected. These sets of frequencies may overlap.

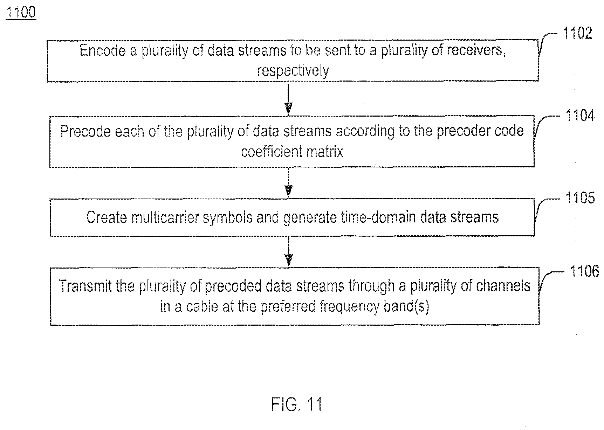

Figure 11 shows a flowchart of an illustrative process **1100** for transmitting data according to embodiments of the present disclosure. At step **1102,** the symbol encoder **62** may encode one or more data streams to be sent to one or more receivers via the cable **16.** In embodiments, the symbol encoder **62** may use various types of modulation technique, such as Quadrature Amplitude and phase modulation (QAM) and Quadrature phaseshift keying (QPSK), to modulate the transmission data **60.** Optionally, at step **1104,** the precoder **64** may precode the encoded data streams according to the coefficient matrix **810.** At step **1105,** the modulator may create multicarrier symbols and generate time-domain samples. Then, at step **1106,** the plurality of precoded data streams may be transmitted through a plurality of waveguide-mode channels in the cable **16** at preferred frequencies.

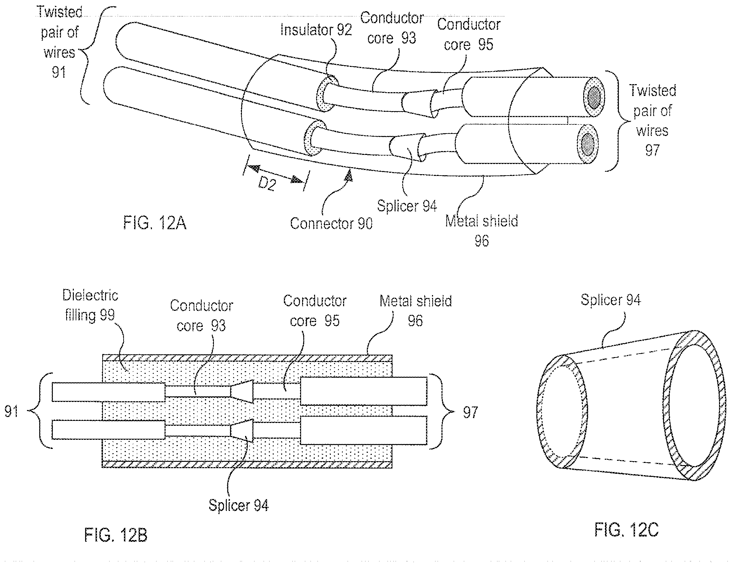

Figure 12A shows a schematic diagram of a pair of wires **91** connected to another pair of wires **97** by a connector **90** according to embodiments of the present disclosure. Figure 12B shows a cross section view of the connector **90** in Figure 12A according to embodiments of the present disclosure. Figure 12C is an enlarged view of the splicer **94** according to embodiments of the present disclosure.

As depicted, the twisted pair of wires **91(and 97)** may include two wires that each includes a conductor core **93** covered with an insulator **92.** The connector **90** may include a metal shield **96,** splicers **94** that couple the conductor cores **93** and **95,** and dielectric material **99** that fills the inner space of the shield **96.** The shield **96** and the dielectric filling **99** may firmly secure the first pair of wires **91** and the splicers **94** to the second pair of wires **97.**

In embodiments, each splicer **94** may have a hollow frustum shape, where the inner diameters at both ends of each splicer may be larger than the outer diameters of the conductor cores **93** and **95.** The splicer **94** may be formed of metal that is thicker than several skin depths of the waveguide-mode signals. It is noted that the proximal end of the conductor core **93** does not need to touch the distal end of the conductor core **95** since the waveguide modes may travel a few wavelengths from the proximal end of the conductor core **93.** In embodiments, the overlap, D2, of the shield **96** with the insulator **92** may be several wavelengths of the waveguide-mode signals.

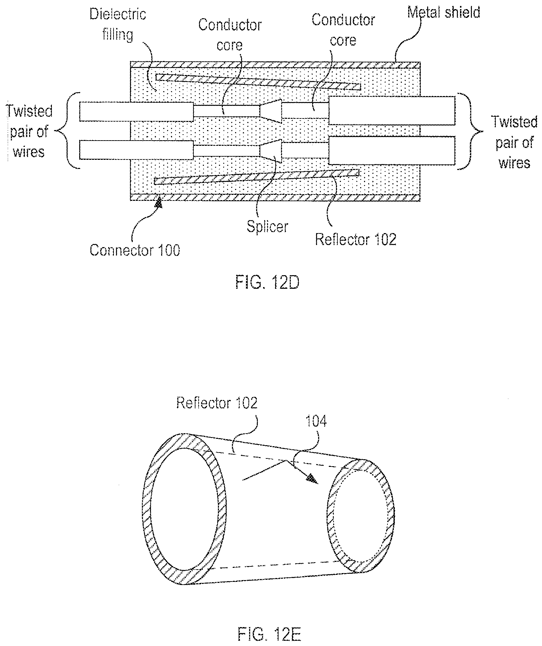

Figure 12D shows a cross section view of a connector **100** according to embodiments of the present disclosure. The connector **100** may be similar to the connector **90,** with the difference that a reflector **102** may be included in the connector **100.** Figure 12E is an enlarged view of the reflector **102** according to embodiments of the present disclosure. In embodiments, the reflector **102** may be formed of metal and have a shape of hollow frustum. The reflector **102** may reflect the waveguide-mode signals **104** toward to the center of the connector **100,** as indicated by the arrow **104,** so that the corresponding waves are confined within the reflector **102.**

System Analysis

For the purpose of illustration, an analysis of the system performance has been performed.

Channel model:

The channel insertion loss may be modeled by a conventional transmission line theory as long linear in frequency and distance. Measured values for the attenuation coefficient on conductor cores of the same diameter as phone lines can be expressed as

$$H(f) = exp(\text{-}0.05*(f/10^{11})*d)\text{Eq.} \qquad (1)$$

where $d$ is the diameter in meters and $f$ is frequency in Hz.

Crosstalk interference between twisted pairs may be highly random and depend on the twisting of the various pairs of wires relative to one another. However, the log-normal model is well known to approximate (when averages are taken over the ensemble of the distribution) crosstalk in twisted-pair cable models, where the crosstalk contribution from all other pairs to a single wire may be expressed as

$$X(f) = 10^{(k/10)}* exp(\text{-}0.05*(f/10^{11})*d)\text{Eq.} \qquad (2)$$

where k is log-normal distributed with the mean at 0 db and variance of 9.0 db.

Transmission speeds and improvements from the invention

Discrete multitone (DMT) systems are used heavily in xDSL transmission. That structure is re-used in the present disclosure, just with wider bandwidths, and may support a vectored implementation. A software simulation of the system described here was constructed and run. The specific simulation parameters include

20 dBm total transmission power, float transmit PSD,
2048 or 4096 sub-carriers in frequency bands ranging between 60 GHz to 500 GHz, with various sub-carrier spacing,
Bit loading from 1 to 12 bits/Hz,
10% phy-layer overhead removed before presenting results,
4.5 db coding gain, 1.5 db implementation loss,
-160 dbm/Hz background AWGN, 100 channels, vector precoded with either zero-forcing linear precoder or non-linear precoder (NLP) using generalized decision feedback equalization (GDFE), and Ideal channel estimation is assumed.

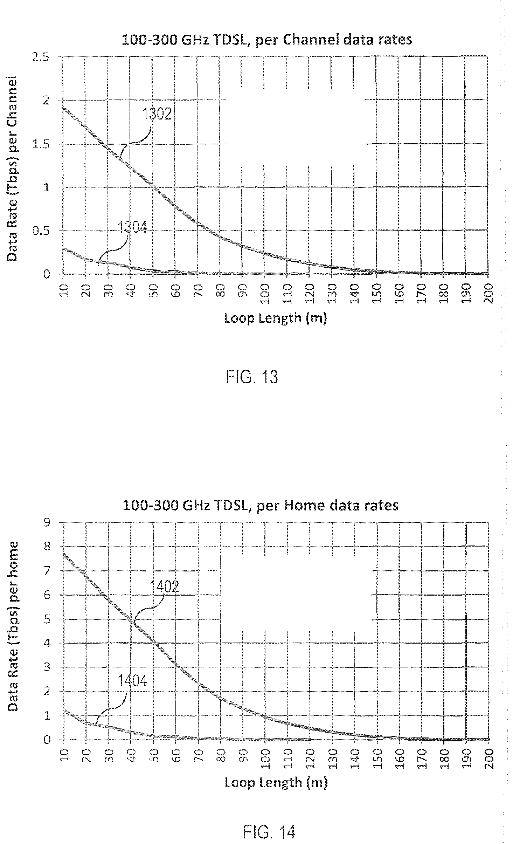

For the model above, the consequent data rates are shown in Figure 13 for each polarization of each wire. In Figure 13, the upper curve **1302** represents a data rate per channel (in the unit of Tbps) as a function of loop length (in the unit of meter) when a non-linear GDFE precoder is used to precode the downstream signal. Likewise, the lower curve **1304** represents a data rate per channel (in the unit of Tbps) as a function of loop length (in the unit of meter) when a linear precoder is used to precode the downstream signal. In Figure 13, the data rate is the data transmission rate averaged across the 100 channels.

Figure 14 shows a plot of data rates vs. loop length according to embodiments of the present disclosure. In Figure 14, the upper curve **1402** represents a data rate per receiver (in the unit of Tbps) as a function of loop length (in the unit of meter) when a non-linear GDFE precoder is used to precode the downstream signal. Likewise, the lower curve **1404** represents a data rate per receiver (in the unit of Tbps) as a function of loop length (in the unit of meter) when a linear precoder is used to precode the downstream signal. In Figure 14, the data rate is the data transmission rate per home averaged across all 100 channels. Since each home has a phone cable that has two wires and each wire can have two channels (or modes) of transmission, the data rates in Figure 14 are about 4 times as high as the data rates in Figure 13.

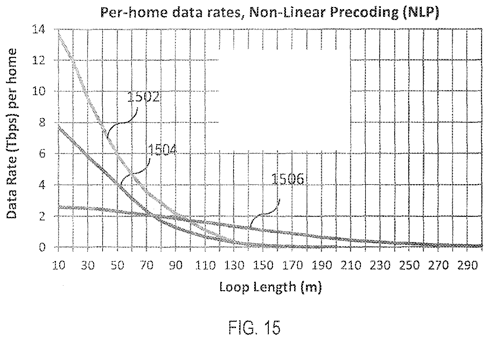

Figure 15 shows a plot of data rate per receiver as a function of loop length (in the unit of meter) according to embodiments of the present disclosure. A non-linear precoder is used to generate the plot in Figure 15. As depicted, the three curves represent data rate for three different frequency ranges: 100 - 500 GHz **(1502),** 100 - 300 GHz **(1504)** and 60-120 GHz **(1506),** where the data rate decreases as the loop length increases.

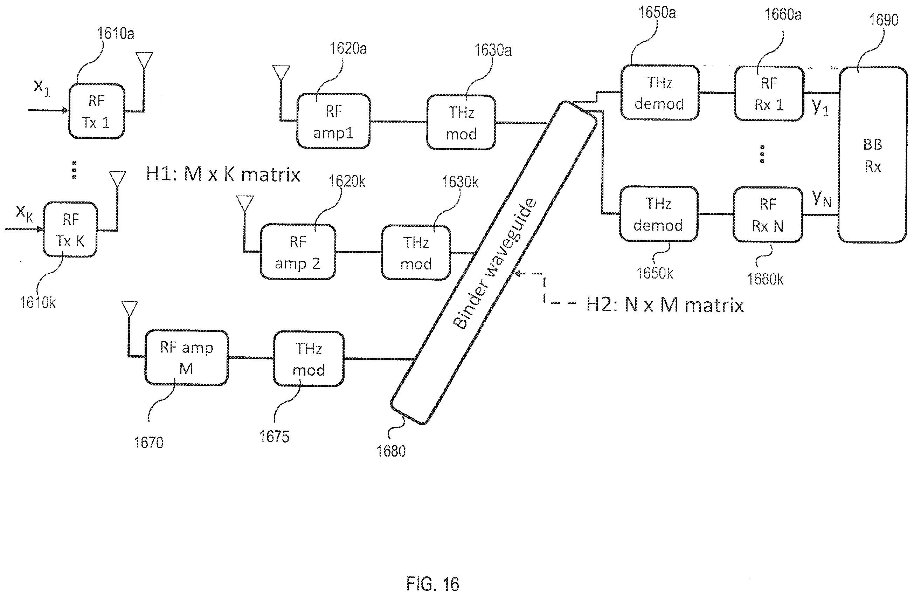

Figure 16 illustrates a system in which wireless signals are transmitted between air interfaces and subsequently communicated across a high-speed waveguide structure according to various aspects of the invention. As shown, the system comprises a plurality of Radio Frequency (RF) transmitters **1610a...1610k** from which wireless signals are transmitted. The wireless signals are received at a plurality of receiver antennas and amplified by amplifiers **1620a... 1620k** and modulated by a plurality of modulators **1630a...1630k.** The rate of signals may vary in accordance with different embodiments of the invention. As illustrated, these exemplary signals are operating within the near- and TeraHertz frequency ranges, but other frequencies are supported by the invention. The modulated signals are transmitted into a binder waveguide **1680** that transports the signals through the waveguide structure in accordance with the various methods described above.

The binder wave **1680** may receive signals from other sources such as the illustrated receiver with corresponding RF amplifier **1670** and modulator **1675.** One skilled in the art will recognize that a large number of signal sources may be supported by the different embodiments of the invention.

The output of the binder waveguide **1680** may interface with one or more paths to further process the signals. In this example, the output is coupled to a plurality baseband down-conversion paths corresponding to the wireless signals transmitted by wireless transmitters **1610a...1610k.** Each of these paths may include various components including demodulators **1650a... 1650k,** RF receivers **1660a...1660k** and corresponding baseband receiver **1690.** One skilled in the art will recognize that other components may be included in both up-conversion and down-conversion.

In various embodiments of the invention, the modulator **1630a** and demodulator **1650a** convert RF radio signals to the frequencies carried on the binder waveguide **1680.** Various embodiments, both structurally and functionally, of the binder waveguide **1680** are described above. Signals can be shifted between frequencies appropriate to the wire waveguide interface and frequencies appropriate to the radio interface. Up-conversion is the process of shifting a set of frequencies to a higher frequency band, and down-conversion is the process of shifting a set of frequencies to a lower frequency band. Additional modulation/demodulation steps may be performed so that the modulation format is appropriate to RF on the radio interfaces, and the modulation format is appropriate to waveguide transmission on the wires. There may also be additional signal processing, such as precoding and post-cancellation on the input and output of the wire waveguides. In the alternative, there may be no electrical conversion other than directly coupling the wire waveguide signals to the radio interface with antennas. In an embodiment, analog modulators and analog demodulators are used. Then, the received signals at the output of RF Rx 1 to RF Rx N can be written as the following equation

$$\begin{bmatrix} y_1 \\ \vdots \\ y_N \end{bmatrix} = \begin{bmatrix} H_{2,11} & \cdots & H_{2,1M} \\ \vdots & \ddots & \vdots \\ H_{2,N1} & \cdots & H_{2,NM} \end{bmatrix} \left( \begin{bmatrix} H_{1,11} & \cdots & H_{1,1K} \\ \vdots & \ddots & \vdots \\ H_{1,M1} & \cdots & H_{1,MK} \end{bmatrix} \begin{bmatrix} x_1 \\ \vdots \\ x_K \end{bmatrix} + \begin{bmatrix} n_{1,1} \\ \vdots \\ n_{1,M} \end{bmatrix} \right) + \begin{bmatrix} n_{2,1} \\ \vdots \\ n_{2,N} \end{bmatrix},$$

where H1,mk is the channel between RF Tx k and RF amp m; H2,kn is the baseband channel between the kth THz modulator and the nth THz demodulator. If N>=M>=K and if H1 and H2 are full rank matrices, H2*H1 is full rank; therefore, the RF Tx and RF Rx pairs will see the combined channel as a wireless MIMO channel and standard MIMO algorithms can be applied to RF Tx and RF Rx without requiring any signal processing in THz mod/demod. This embodiment and similar embodiments provide a level of simplification by combining both the RF and the waveguide MIMO processing. By using the binder waveguide with longer range to carry the RF signal, the range of communication systems can be increased significantly. A range or structures between these is possible, performing some functions with electrical devices and some functions passively.

The waveguide modes transmitted on wires can be used to distribute highfrequency signals throughout an entire building or campus environment, with conversion to and from wireless providing wireless coverage in each room or area. Examples of these modes are provided above.

One skilled in the art will recognize the advantages of employing high-speed connectivity between base stations, microcell towers, Wi-Fi access points, remote radio heads (RRHs), baseband units (BBUs), mobile switching centers, etc., where coordination or an exchange of information between these devices may be provided to optimize network performance. For example, in the case of 5G where base stations may coordinate both uplink and downlink communication within one or more cells, the rate at which data is exchanged between these base stations is important to ensure proper operation. Additionally, this point-to-point communication may leverage at least partially existing wires/cables that have already been installed. The use of the above-described communication techniques may be applied to other backhaul systems within today's and future wireless systems which will allow a more efficient, and faster deployment of higher-speed system by leveraging previously installed cabling and wire.

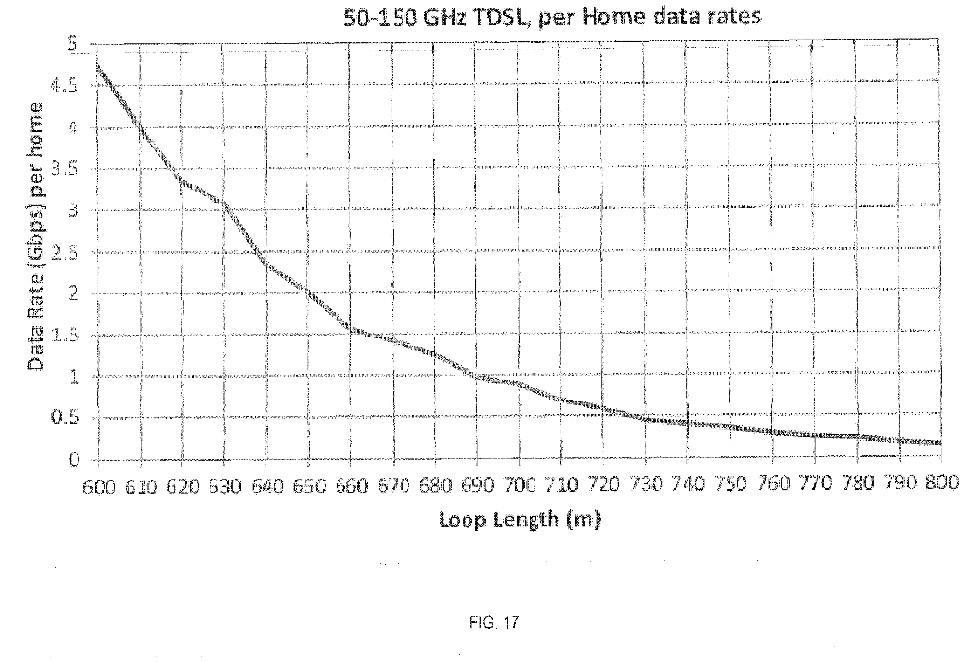

Figure 17 illustrates a data rate plot per home as a function of loop length in accordance with various embodiments of the present disclosure. In this example, a non-linear precoder is used to generate the plot with simulations being the same as those shown in Figures 13-15, except an assumption that a low-rate modulation can support bit loading within an appropriate range (e.g., 0 - 12 bits/Hz). In addition, the transmit spectra are optimized for long reach applications.

Embodiments of the present disclosure may be encoded upon one or more non-transitory computer-readable media with instructions for one or more processors or processing units to cause steps to be performed. It shall be noted that the one or more non-transitory computer-readable media shall include volatile and non-volatile memory. It shall be noted that alternative implementations are possible, including a hardware implementation or a software/hardware implementation. Hardware-implemented functions may be realized using ASIC(s), programmable arrays, digital signal processing circuitry, or the like. Accordingly, the "means" terms in any claims are intended to cover both software and hardware implementations. Similarly, the term "computer-readable medium or media" as used herein includes software and/or hardware having a program of instructions embodied thereon, or a combination thereof. With these implementation alternatives in mind, it is to be understood that the figures and accompanying description provide the functional information one skilled in the art would require to write program code (i.e., software) and/or to fabricate circuits (i.e., hardware) to perform the processing required.

It shall be noted that embodiments of the present disclosure may further relate to computer products with a non-transitory, tangible computer-readable medium that have computer code thereon for performing various computer-implemented operations. The media and computer code may be those specially designed and constructed for the purposes of the present disclosure, or they may be of the kind known or available to those having skill in the relevant arts. Examples of tangible computer-readable media include, but are not limited to: magnetic media such as hard disks, floppy disks, and magnetic tape; optical media such as CD-ROMs and holographic devices; magneto-optical media; and hardware devices that are specially configured to store or to store and execute program code, such as application specific integrated circuits (ASICs), programmable logic devices (PLDs), flash memory devices, and ROM and RAM devices. Examples of computer code include machine code, such as produced by a compiler, and files containing higher level code that are executed by a computer using an interpreter. Embodiments of the present disclosure may be implemented in whole or in part as machine-executable instructions that may be in program modules that are executed by a processing device. Examples of program modules include libraries, programs, routines, objects, components, and data structures. In distributed computing environments, program modules may be physically located in settings that are local, remote, or both.

One skilled in the art will recognize no computing system or programming language is critical to the practice of the present disclosure. One skilled in the art will also recognize that a number of the elements described above may be physically and/or functionally separated into sub-modules or combined together.

**Claims**

1. A device comprising:

    a transmitter (12) coupled to transmit signals to one or more signal-carrying media having waveguide properties and supporting a plurality of waveguide modes; and
    at least one coupler coupled between the transmitter and the signal-carrying media, the at least one coupler couples the signals to the signal-carrying media via at least one waveguide mode within the plurality of waveguide modes; and
    wherein the signal-carrying media comprises at least one wire, each wire comprising a conductor covered with a dielectric insulator and the first signal propagates at least partially around the at least one wire;
    **characterized in that** the transmitter has a plurality of antennas (13.1.1-13.2L.p) that shapes and concurrently transmits a first signal into the transmission media;
    wherein the device further comprises a calibration unit coupled within the transmitter, the calibration unit transmits a plurality of test signals onto the signal-carrying media to select a first configuration of the plurality of antennas that results in a preferred shape of the first signal; wherein, the transmitter comprises a vector precoder and one or more of the following is satisfied:

        a. the calibration unit adjusts settings across the vector precoder, the adjustable settings cause a shape of the plurality of test signals to change based on vector weights generated within the precoder and applied to at least one antenna within the plurality of antennas;
        b. the vector precoder reduces an interference caused by another transmitter or coupled from a different transmission mode which is not intended to be received by a corresponding receiver; and
        c. the vector precoder is a type selected from a group consisting of: linear, zero-forcing, minimum mean squared error, MMSE, non-linear, generalized decision feedback equalizer, GDFE.

2. The device of claim 1 wherein the preferred shape is selected based at least in part on feedback from a remote receiver, the feedback identifying a detectability characteristic of at least one of the test signals; wherein, the detectability characteristic is a signal-to-noise measurement of the at least one of the test signals.

3. The device of any one of the preceding claims further comprising a symbol encoder coupled within the transmitter, the symbol encoder encodes data on the first signal prior to transmission onto the signal-carrying media.

4. The device of claim 3 further comprising a modulator coupled within the transmitter, the modulator converts the encoded first signal to a passband signal; wherein, optionally the modulator comprises a passband modulator that converts the encoded first signal in desired wavelengths ranging from .1 mm to 10 mm.

5. The device of any one of the preceding claims wherein one or more of the following is satisfied:

    a. the conductor comprises at least one metal selected from a group consisting of: copper, aluminum, steel and stainless steel; and
    b. the dielectric insulator comprises a non-conductive material selected from a group consisting of: paper, pulp, plastic, polyethylene and PVC.

6. The device of any one of the preceding claims wherein at least one conductive shield covers the at least one wire, and wherein, optionally the conductive shield comprises a metal selected from a group consisting of: copper, aluminum, steel and stainless steel.

7. The device of any one of the preceding claims wherein the at least one coupler comprises one or more of:

    a. a polarizer coupled to the transmitter, the polarizer converts a polarization of the first signal received from the transmitter to a first polarization related to a coupling of at least one waveguide mode within the plurality of waveguide modes; and

b. a signal focusing lens that focuses the first signal received from the transmitter to a first location on the transmission media, the first location being related to a coupling efficiency for at least one waveguide mode within the plurality of waveguide modes.

8. The device of any one of the preceding claims wherein the coupler couples the first signal received from the transmitter to a plurality of wires including at least a pair of wires that couple to a single receiver.

9. The device of any one of the preceding claims wherein the plurality of waveguide modes comprises at least one mode selected from a group consisting of: transverse magnetic, plasmon traverse electro-magnetic, transmission-line, total internal reflection, and transverse electric modes.

10. The device of any one of the preceding claims wherein one or more of the waveguide modes further couples to air and propagates as a radio signal to a receiver.

11. The device of any one of the preceding claims wherein the first signal propagates at least partially in air around the at least one wire.

**Patentansprüche**

1. Vorrichtung, umfassend:

einen Sender (12), der gekoppelt ist, um Signale an ein oder mehrere signalführende Medien zu übertragen, die Wellenleitereigenschaften haben und eine Mehrzahl von Wellenleitermoden unterstützen; und
mindestens einen Koppler, der zwischen dem Sender und den signalführenden Medien gekoppelt ist, wobei der mindestens eine Koppler die Signale in die signalführenden Medien über mindestens eine Wellenleitermode der Mehrzahl von Wellenleitermoden einkoppelt; und
wobei das signalführende Medium mindestens einen Draht umfasst, wobei jeder Draht einen mit einem dielektrischen Isolator bedeckten Leiter umfasst und sich das erste Signal zumindest teilweise um den mindestens einen Draht herum ausbreitet;
**dadurch gekennzeichnet, dass** der Sender eine Mehrzahl von Antennen (13.1.1-13.2L.p) aufweist, die ein erstes Signal formt und gleichzeitig in das Übertragungsmedium sendet;
wobei die Vorrichtung ferner eine Kalibrierungseinheit umfasst, die innerhalb des Senders gekoppelt ist, wobei die Kalibrierungseinheit eine Mehrzahl von Testsignalen an das signalführende Medium sendet, um eine erste Konfiguration der Mehrzahl von Antennen auszuwählen, die zu einer bevorzugten Form des ersten Signals führt; wobei der Sender einen Vektor-Precodierer umfasst und eine oder mehrere der folgenden Aussagen erfüllt sind:

a. die Kalibrierungseinheit passt Einstellungen über den Vektor-Precodierer an, wobei die anpassbaren Einstellungen bewirken, dass sich eine Form der Mehrzahl von Testsignalen auf der Grundlage von in dem Precodierer erzeugten und auf mindestens eine Antenne der Mehrzahl von Antennen angewendeten Vektorgewichten ändert;
b. der Vektor-Precodierer reduziert eine durch einen anderen Sender verursachte oder von einem anderen, nicht für den Empfang durch einen entsprechenden Empfänger bestimmten Übertragungsmodus eingekoppelte Störung; und
c. der Vektor-Precodierer ist von einem Typ, der aus einer Gruppe ausgewählt ist, die besteht aus Linear-, Zero-forcing-, Minimal-Fehlerquadrat-, MMSE-, Nichtlinear-, Generalized-Decision-Feedback-Equalizer-, GDFE-.

2. Vorrichtung nach Anspruch 1, bei der die bevorzugte Form zumindest teilweise auf der Grundlage einer Rückmeldung von einem entfernten Empfänger ausgewählt wird, wobei die Rückmeldung ein Erkennbarkeitsmerkmal von mindestens einem der Testsignale identifiziert; wobei das Erkennbarkeitsmerkmal ein Signal-Rausch-Messwert des mindestens einen der Testsignale ist.

3. Vorrichtung nach einem der vorhergehenden Ansprüche, die ferner einen in dem Sender gekoppelten Symbolcodierer umfasst, wobei der Symbolcodierer Daten auf dem ersten Signal vor der Übertragung auf das signalführende Medium codiert.

4. Vorrichtung nach Anspruch 3, die ferner einen in dem Sender gekoppelten Modulator umfasst, wobei der Modulator das codierte erste Signal in ein Durchlassbandsignal umwandelt; wobei optional der Modulator einen Durchlassbandmodulator umfasst, der das codierte erste Signal in gewünschte Wellenlängen im Bereich von 0,1 mm bis 10 mm um wandelt.

5. Vorrichtung nach einem der vorhergehenden Ansprüche, bei der:

   a. der Leiter mindestens ein Metall umfasst, ausgewählt aus einer Gruppe bestehend aus: Kupfer, Aluminium, Stahl und rostfreiem Stahl; und/oder
   b. der dielektrische Isolator ein nichtleitendes Material umfasst, ausgewählt aus einer Gruppe bestehend aus: Papier, Zellstoff, Kunststoff, Polyethylen und PVC.

6. Vorrichtung nach einem der vorhergehenden Ansprüche, bei der mindestens eine leitende Abschirmung den mindestens einen Draht bedeckt, und bei der optional die leitende Abschirmung ein Metall umfasst, das aus einer Gruppe ausgewählt ist, die aus Kupfer, Aluminium, Stahl und Edelstahl besteht.

7. Vorrichtung nach einem der vorhergehenden Ansprüche, bei der der mindestens eine Koppler umfasst:

   a. einen Polarisator, der mit dem Sender gekoppelt ist, wobei der Polarisator eine Polarisation des vom Sender empfangenen ersten Signals in eine erste Polarisation umwandelt, die sich auf eine Kopplung von mindestens einer Wellenleitermode der Mehrzahl von Wellenleitermoden bezieht; und/oder
   b. eine Signalfokussierungslinse, die das von dem Sender empfangene erste Signal auf eine erste Stelle auf dem Übertragungsmedium fokussiert, wobei die erste Stelle sich auf eine Kopplungseffizienz für mindestens eine Wellenleitermode der Mehrzahl von Wellenleitermoden bezieht.

8. Vorrichtung nach einem der vorhergehenden Ansprüche, bei der der Koppler das vom Sender empfangene erste Signal in eine Mehrzahl von Drähten einkoppelt, darunter mindestens ein Paar von Drähten, die an einen einzigen Empfänger koppeln.

9. Vorrichtung nach einem der vorhergehenden Ansprüche, bei der die Mehrzahl von Wellenleitermoden mindestens eine Mode umfasst, die aus einer Gruppe ausgewählt ist, die besteht aus: transversal magnetischen, plasmonisch transversal elektromagnetischen, Transmission-Line-, Totalbinnenreflexions- und transversal elektrischen Moden.

10. Vorrichtung nach einem der vorhergehenden Ansprüche, bei der eine oder mehrere der Wellenleitermoden ferner an Luft koppeln und sich als Funksignal zu einem Empfänger ausbreiten.

11. Vorrichtung nach einem der vorhergehenden Ansprüche, bei der sich das erste Signal zumindest teilweise in der Luft um den mindestens einen Draht herum ausbreitet.


**Revendications**

1. Dispositif, comprenant :

   un transmetteur (12) couplé pour transmettre des signaux à un ou plusieurs supports porteurs de signal présentant des propriétés de guide d'ondes et supportant une pluralité de modes de guide d'ondes ; et
   au moins un coupleur couplé entre le transmetteur et le support porteur de signal, le au moins un coupleur couple les signaux au support porteur de signal via au moins un mode de guide d'ondes de la pluralité de modes de guide d'ondes ; et
   dans lequel le support porteur de signal comprend au moins un fil, chaque fil comprenant un conducteur recouvert d'un isolant diélectrique et le premier signal se propage au moins partiellement autour du au moins un fil ; **caractérisé en ce que** le transmetteur présente une pluralité d'antennes (13.1.1-13.2L.p) qui forment et transmettent simultanément un premier signal dans le support de transmission ;
   dans lequel le dispositif comprend en outre une unité d'étalonnage couplée à l'intérieur du transmetteur, l'unité d'étalonnage transmet une pluralité de signaux de test sur le support porteur de signal pour sélectionner une première configuration de la pluralité d'antennes qui se traduit par une forme préférée du premier signal ; dans lequel, le transmetteur comprend un précodeur vectoriel et un ou plusieurs des points suivants sont satisfaits :

a. l'unité d'étalonnage ajuste des paramètres à travers le précodeur vectoriel, les paramètres ajustables provoquent un changement de forme de la pluralité de signaux de test sur la base de poids de vecteur générés dans le précodeur et appliqués à au moins une antenne de la pluralité d'antennes ;

b. le précodeur vectoriel réduit une interférence provoquée par un autre transmetteur ou couplée à partir d'un mode de transmission différent qui n'est pas destiné à être reçu par un récepteur correspondant ; et

c. le précodeur vectoriel est un type sélectionné dans un groupe comprenant : linéaire, à forçage nul, erreur quadratique moyenne minimale, MMSE, égaliseur de rétroaction de décision non linéaire et généralisé, GDFE.

2. Dispositif selon la revendication 1, dans lequel la forme préférée est sélectionnée sur la base, au moins en partie, d'une rétroaction provenant d'un récepteur à distance, la rétroaction identifiant une caractéristique de détectabilité d'au moins un des signaux de test ; dans lequel, la caractéristique de détectabilité est une mesure signal-bruit du au moins un des signaux de test.

3. Dispositif selon l'une quelconque des revendications précédentes, comprenant en outre un codeur de symbole couplé à l'intérieur du transmetteur, le codeur de symbole codant des données sur le premier signal avant la transmission sur le support porteur de signal.

4. Dispositif selon la revendication 3, comprenant en outre un modulateur couplé à l'intérieur du transmetteur, le modulateur convertissant le premier signal codé en un signal de bande passante ; dans lequel, facultativement, le modulateur comprend un modulateur de bande passante qui convertit le premier signal codé dans des longueurs d'onde souhaitées allant de 0,1 mm à 10 mm.

5. Dispositif selon l'une quelconque des revendications précédentes dans lequel un ou plusieurs des points suivants sont satisfaits :

a. le conducteur comprend au moins un métal sélectionné dans un groupe comprenant : cuivre, aluminium, acier et acier inoxydable ; et

b. l'isolant diélectrique comprend un matériau non conducteur sélectionné dans un groupe comprenant : papier, pâte, plastique, polyéthylène et PVC.

6. Dispositif selon l'une quelconque des revendications précédentes, dans lequel au moins un blindage conducteur recouvre le au moins un fil, et dans lequel, facultativement, le blindage conducteur comprend un métal choisi dans le groupe comprenant : cuivre, aluminium, acier et acier inoxydable.

7. Dispositif selon l'une quelconque des revendications précédentes, dans lequel le au moins un coupleur comprend un ou plusieurs parmi :

a. un polariseur couplé au transmetteur, le polariseur convertissant une polarisation du premier signal reçu à partir du transmetteur en une première polarisation liée à un couplage d'au moins un mode de guide d'ondes de la pluralité de modes de guide d'ondes ; et

b. une lentille de focalisation de signal qui focalise le premier signal reçu à partir du transmetteur vers un premier emplacement sur le support de transmission, le premier emplacement étant lié à une efficacité de couplage pour au moins un mode de guide d'ondes de la pluralité de modes de guide d'ondes.

8. Dispositif selon l'une quelconque des revendications précédentes, dans lequel le coupleur couple le premier signal reçu à partir du transmetteur à une pluralité de fils incluant au moins une paire de fils qui se couplent à un récepteur unique.

9. Dispositif selon l'une quelconque des revendications précédentes, dans lequel la pluralité de modes de guide d'ondes comprend au moins un mode sélectionné dans un groupe comprenant : modes magnétiques transversaux, électro-magnétiques de traversée de plasmon, de ligne de transmission, de réflexion interne totale et électriques transversaux.

10. Dispositif selon l'une quelconque des revendications précédentes, dans lequel un ou plusieurs des modes de guide d'ondes sont en outre couplés à l'air et se propagent sous la forme d'un signal radio vers un récepteur.

**11.** Dispositif selon l'une quelconque des revendications précédentes, dans lequel le premier signal se propage au moins partiellement dans l'air autour du au moins un fil.

FIG. 1

EP 3 619 864 B1

FIG. 2

FIG. 3A

FIG. 3B

Cable 166

Twisted
wire pair
168

Twisted
wire pair
168

FIG. 3C

r2

Waveguide 28

Insulator 24

Conductor
core  22

Wire 21

r1

Waveguide 28

FIG. 4

FIG. 5

FIG. 6A

Transmitter/
Receiver
antenna 38a

Transmitter/
Receiver
antenna 38b

Insulator 24

Conductor
core  22

Wire 21

FIG. 6B

Transmitter/
Receiver
antenna 38c

Transmitter/
Receiver
antenna 38d

Wire 21

FIG. 6C

Insulator 24

Wire 21

Conductor
core 22

Transmitter/
Receiver
antenna 40

Wire 21

FIG. 7A

Transmitter/
Receiver
antenna 41

Transmitter/
Receiver
antenna 41

Wire 21

Insulator 24

Conductor
core 22

Wire 21

FIG. 7B

Transmitter/
Receiver
antenna 42

Transmitter/
Receiver
antenna 42

Wire 21

Wire 21

FIG. 7C

EP 3 619 864 B1

Frequency band 802

Frequency (Hz)

804.1    804.2

Sub-carrier

804.N

Sub-carrier

FIG. 8A

Transmitter 12

806.1.1

806.1.2

Precoder
coefficient
matrix 810

Precoder
output

Cable 16

806.2L.p

FIG. 8B

26

900

Antenna array 52

Cable 16

Transmission signal to CPEs 54

Modulated signals 77

Downstream transmitter

Symbol Encoder 62

Precoder 64

Modulator 76

Channel response feedback processor 66

Initialization Unit 74

Transmission input data 60

Channel response feedback 68

Defined bit sequence 72

Through feedback signal

FIG. 9A

FIG. 9B

1000

Send probing sequences, covering all candidate sub-carreir frequencies on each of the channels — 1002

For each channel, receive channel response feedback from each receiver at each sub-carrier frequency — 1004

Estimate channel responses of all channels and crosstalk responses between all pairs of channels — 1006

Based on the estimated channel responses and crosstalk responses, identify useful sub-carrier frequencies for each channel and/or power-spectral-density of transmission for each channel — 1008

For each channel, select one of the useful sub-carrier frequencies that is used for transmitting data — 1010

FIG. 10

1100

| Encode a plurality of data streams to be sent to a plurality of receivers, respectively | ⟋— 1102 |

| Precode each of the plurality of data streams according to the precoder code coefficient matrix | ⟋— 1104 |

| Create multicarrier symbols and generate time-domain data streams | ⟋— 1105 |

| Transmit the plurality of precoded data streams through a plurality of channels in a cable at the preferred frequency band(s) | ⟋— 1106 |

FIG. 11

FIG. 12A

Twisted pair of wires 91

Insulator 92
Conductor core 93
Conductor core 95

Twisted pair of wires 97

D2

Connector 90
Splicer 94
Metal shield 96

FIG. 12B

Dielectric filling 99
Conductor core 93
Conductor core 95
Metal shield 96

91
97

Splicer 94

FIG. 12C

Splicer 94

FIG. 12D

FIG. 12E

FIG. 13

FIG. 14

FIG. 15

RF Tx 1 — 1610a — $x_1$

RF Tx K — 1610k — $x_K$

RF amp1 — 1620a

RF amp 2 — 1620k

RF amp M — 1670

THz mod — 1630a

THz mod — 1630k

THz mod — 1675

H1: M x K matrix

Binder waveguide — 1680

THz demod — 1650a

THz demod — 1650k

RF Rx 1 — 1660a — $y_1$

RF Rx N — 1660k — $y_N$

H2: N x M matrix

BB Rx — 1690

FIG. 16

FIG. 17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62500951 B
- US 62504453 B
- US 62513227 B
- US 62513834 B
- WO 2017065906 A1
- US 20170018833 A1